# EUROPEAN PATENT APPLICATION

(11) **EP 2 863 287 A2**
(43) Date of publication of application: **22.04.2015**
(21) Application number: 14184063.7
(22) Date of filing: 09.09.2014
(51) Int. Cl.: G06F 1/16

(54) **Terminal and operating method thereof**

(30) Priority: 15.10.2013 KR 20130122673
(71) Applicant: LG Electronics, Inc., Seoul 150-721 (KR)
(72) Inventor: Shim, Hongjo, 137-893 Seoul (KR); Lee, Dongeon, 137-893 Seoul (KR); Kim, Seonghyok, 137-893 Seoul (KR)
(74) Representative: Cabinet Plasseraud

(57) **Abstract**

A mobile terminal combinable with a terminal case including a front cover with a front incision part. The mobile terminal includes a wireless communication unit configured to provide wireless communication; a touch screen; a state detection sensor configured to detect whether the front cover is in an opened state or a closed state with respect to the mobile terminal; a color sensor configured to detect a color of the front cover; and a controller configured to control the touch screen based on whether the front cover is in the opened or closed state and the detected color of the front cover.

## Description

### BACKGROUND OF THE INVENTION

### Field of the Invention

The present invention relates to a terminal and an operating method thereof, and particularly, to an application setting in the terminal.

### Discussion of the Background

Terminals can be classified into mobile/portable terminals and stationary terminals. The mobile/portable terminals may be classified into handheld terminals and vehicle mounted. As functions of such terminals are diversified, for example, terminals are implemented as multimedia players having multiple functions, for example, shooting photos and videos, playing music or video files, and receiving broadcasts.

Mobile terminals are also combined with terminal cases to protect the mobile terminals. However, the protection function is limited which inconveniences the user.

### SUMMARY OF THE INVENTION

Accordingly, one embodiment of the present invention provides a mobile terminal user interface matching a terminal case intuitively and easily and an operating method thereof.

In one embodiment, the present invention provides a mobile terminal combinable with a terminal case including a front cover with a front incision part, the terminal including: a touch screen; a state detection unit detecting a state of the front cover; a color sensor detecting a color of the front cover; and a controller controlling the touch screen based on the state of the front cover and the color of the front cover.

In another embodiment, the present invention provides an operating method of a mobile terminal combinable with a terminal case including a front cover with a front incision part, the method including: detecting a state of the front cover; detecting a color of the front cover, by using a color sensor; and controlling a touch screen based on the state of the front cover and the color of the front cover.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:
Fig. 1 is a block diagram of a mobile terminal according to an embodiment of the present invention;
Fig. 2 is a perspective view illustrating a terminal case when the front cover is an opened state and a mobile terminal is combined with the terminal case according to an embodiment of the present invention;
Fig. 3 is a perspective view illustrating a terminal case combined with a mobile terminal when the terminal case is an opened state according to an embodiment of the present invention;
Fig. 4 is a perspective view illustrating a terminal case combined with a mobile terminal when the terminal case is in a closed state according to an embodiment of the present invention;
Fig. 5 is a front view illustrating a terminal case combined with a mobile terminal when the terminal case is in a closed state according to an embodiment of the present invention;
Fig. 6 is a view illustrating a structure of a proximity sensor and its surrounding structure according to an embodiment of the present invention;
Fig. 7 is a view illustrating a structure of a proximity sensor and its surrounding structure according to another embodiment of the present invention;
Fig. 8 is a view illustrating an operation of a mobile terminal according to an embodiment of the present invention;
Fig. 9 is a flowchart illustrating a method of detecting the color of a front cover according to an embodiment of the present invention; and
Fig. 10 is a flowchart illustrating a method of detecting the color of a front cover according to an embodiment of the present invention.

### DETAILED DESCRIPTION OF THE EMBODIMENTS

Hereinafter, a mobile terminal relating to the present invention is described in more detail with reference to the drawings. The suffixes "module" and "unit" for components used in the description below are assigned or mixed in consideration of easiness in writing the specification and do not have distinctive meanings or roles by themselves.

A mobile terminal described in this specification may include a mobile phone, a smart phone, a laptop computer, a digital broadcasting terminal, a person digital assistant (PDA), a portable multimedia player (PMP), and a navigation. However, it is apparent to those skilled in the art that a configuration listed in an embodiment of the present invention is applied to a stationary terminal such as a digital TV and a desktop computer except when only applicable to a mobile terminal.

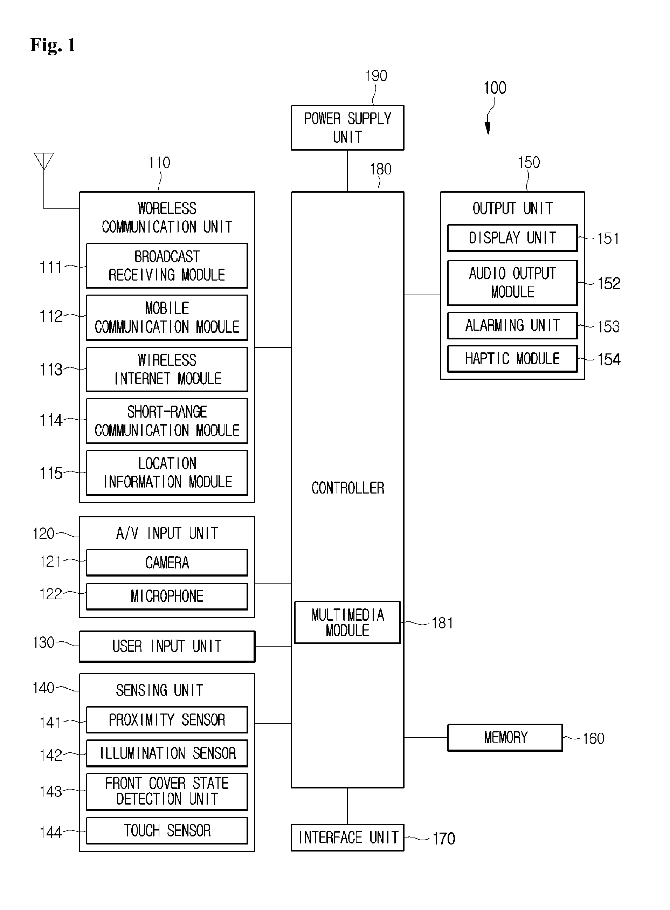

A structure of a mobile terminal according to an embodiment of the present invention will now be described with reference to Fig. 1. In particular, Fig. 1 is a block diagram of a mobile terminal 100 according to an embodiment of the present invention.

The mobile terminal 100 includes a wireless communication unit 110, an Audio/Video (A/V) input unit 120, a user input unit 130, a sensing unit 140, an output unit 150, a memory 160, an interface unit 170, a controller 180, and a power supply unit 190. The mobile terminal 100 may include more or less components.

The wireless communication unit 110 may include at least one module allowing wireless communication between the mobile terminal 100 and a wireless communication system or between the mobile terminal 100 and a network including the mobile terminal 100. For example, the wireless communication unit 110 may include a broadcast receiving module 111, a mobile communication module 112, a wireless internet module 113, a short-range communication module 114, and a position information module 115.

The broadcast receiving module 111 receives a broadcast signal and/or broadcast related information from an external broadcast management server through a broadcast channel. The broadcast channel may include a satellite channel and a terrestrial channel. The broadcast management server may mean a server generating and transmitting a broadcast signal and/or broadcast related information or a server receiving and transmitting a pre-generated broadcast signal and/or broadcast related information. The broadcast signal may include a TV broadcast signal, a radio broadcast signal, and a data broadcast signal, and also may include a broadcast signal combining a TV broadcast signal or a radio broadcast signal with a data broadcast signal.

The broadcast related information may mean information relating to a broadcast channel, a broadcast program, or a broadcast service provider. The broadcast related information may be provided through a mobile communication network. In this instance, the broadcast related information may be received by the mobile communication module 112.

The broadcast related information may exist in various forms. For example, the broadcast related information may exist in forms such as Electronic Program Guide (EPG) of Digital Multimedia Broadcasting (DMB) or Electronic Service Guide (ESG) of Digital Video Broadcast-Handheld (DVB-H).

The broadcast receiving module 111 may receive a digital broadcast signal by using a digital broadcast system such as Digital Multimedia Broadcasting-Terrestrial (DMB-T), Digital Multimedia Broadcasting-Satellite (DMB-S), Media Forward Link Only (MediaFLO), Digital Video Broadcast-Handheld (DVB-H), or Integrated Services Digital Broadcast-Terrestrial (ISDB-T). Of course, the broadcast receiving module 111 may be configured to be proper for another broadcast system in addition to the digital broadcast system.

The broadcast signal and/or broadcast related information received through the broadcast receiving module 111 may be stored in the memory 160.

The mobile communication module 112 transmits/receives a wireless signal to/from at least one of a base station, an external terminal, and a server on a mobile communication network. The wireless signal may include various forms of data according to a voice call signal, a video call signal, or text/multimedia message transmission.

The wireless internet module 113 is a module for wireless internet access, and may be internally or externally included in the mobile device 100. As wireless internet technology, there are Wireless LAN (WLAN) (Wi-Fi), Wireless broadband (Wibro), World Interoperability for Microwave Access (Wimax), and High Speed Downlink Packet Access (HSDPA).

The short-range communication module 114 refers to a module for short-range communication. As short range communication technology, there are Bluetooth, Radio Frequency Identification (RFID), infrared Data Association (IrDA), Ultra Wideband (UWB), and ZigBee. The position information module 115 is a module for obtaining the position of a mobile terminal, and its representative example includes a Global Position System (GPS) module.

Referring to Fig. 1, the A/V input unit 120 is used to input an audio signal or a video signal, and may include a camera 121 and a microphone 122. The camera 121 processes a video frame such as a still image or a moving image obtained by an image sensor in a video call mode or a capture mode. The processed video frame may be displayed on a display unit 151.

The video frame processed by the camera 121 may be stored in the memory 160 or may be transmitted to the outside through the wireless communication unit 110. The camera 121 may be provided two according to a usage environment.

The microphone 122 receives an external sound signal through a microphone in a call mode, a recoding mode, or a voice recognition mode and processes it as voice data. In the case of a call mode, the processed voice data may be converted into a format that can be sent to a mobile communication base station and then output through the mobile communication module 112. The microphone 122 may have various noise reduction algorithms to remove noise occurring while an external sound signal is input.

The user input unit 130 generates input data to allow a user to control an operation of a terminal. The user input unit 130 may include a key pad, a dome switch, a touch pad (resistive/capacitive), a jog wheel, and a jog switch.

The sensing unit 140 detects a current state of the mobile terminal 100, for example, an opened/closed state of the mobile terminal 100, a position of the mobile terminal 100, user contact, an orientation of the mobile terminal 100, and an acceleration/deceleration of the mobile terminal 100, and then generates a sensing signal to control an operation of the mobile terminal 100. For example, when the mobile terminal 100 is a slide phone, whether the slide phone is in an open/closed state may be sensed. Additionally, the sensing unit 140 may sense power supply of the power supply unit 190 and external device connection of the interface unit 170.

Moreover, the sensing unit 140 may include a proximity sensor 141, an illuminator sensor 142, a front cover state detection unit 143, and a touch sensor 144.

The illuminator sensor 142 can sense optical properties and especially senses the optical properties of the front cover. The illuminator sensor 142 may include another proximity sensor, a color sensor, a visible light illumination sensor, an infrared illumination sensor, an image sensor, and a diffused reflection sensor.

The front cover state detection unit 143 can detect a state of the front cover. Especially, the front cover state detection unit 143 can detect a closed or opened state of the front cover. The front cover state detection unit 143 may include a Hall sensor. In this instance, the front cover includes a magnetic body. The Hall sensor can detect a state of the front cover by detecting changes in the magnetic field according to a state change of the front cover.

The front cover state detection unit 143 can include a gesture sensor formed of a plurality of two-dimensionally disposed visible light illumination detection electrodes and the proximity sensor 141. In this instance, the front cover state detection unit 143 can detect a state of the front cover based on a sensing value detected by the plurality of visible light illumination detection electrodes and the proximity sensor 141 when a state of the front cover changes.

The front cover state detection unit 143 may include an acceleration sensor. In this instance, the front cover state detection unit 143 can detect a state of the front cover based on an acceleration value according to a unique impact when a state of the front cover changes.

The output unit 150 generates a visual, auditory, and haptic related output and may include a display unit 151, an audio output module 152, an alarming unit 153, and a haptic module 154. The display unit 151 displays (outputs) information processed in the mobile terminal 100. For example, when a mobile terminal is in a call mode, a call related User Interface (UI) or Graphic User Interface (GUI) is displayed. When the mobile terminal 100 is in a video call mode, or a capture mode, a captured or/and received image, UI, or GUI is displayed.

The display unit 151 may include at least one of a liquid crystal display (LCD), a thin film transistor-liquid crystal display (a TFT LCD), an organic light-emitting diode (OLED), a flexible display, and a 3D display.

Among them, some displays may be a transparent or light transmissive type so that it is possible to see the outside through them. This may be called a transparent display, and its representative example includes a Transparent OLED (TOLED). The display unit 151 may have a rear structure or a light transmissive type structure. Due to such a structure, a user may see an object at the rear of the terminal body through an area that the display unit 151 of the terminal body occupies.

According to an implementation form of the mobile terminal 100, at least two display units 151 may exist. For example, a plurality of display units are separately or integrally disposed at one side or different sides, respectively, in the mobile terminal 100.

When the display unit 151 and a sensor sensing a touch operation (hereinafter, referred to as the 'touch sensor' 144) constitute a mutual layer structure (hereinafter, referred to as a 'touch screen'), the display unit 151 may be used as an input device in addition to an output device. The touch sensor 144 may have a form of a touch film, a touch sheet, or a touch pad.

The touch sensor 144 may be configured to covert a pressure applied to a specific portion of the display unit 151, or a change in capacitance occurring at a specific portion of the display unit 151 into an electrical input signal. The touch sensor 144 may be configured to sense a pressure at the time of touch in addition to a touched position and area.

When there is touch input on the touch sensor 144, signal(s) corresponding thereto may be sent to a touch controller. The touch controller processes the signal(s) and transmits corresponding data to the controller 180. By doing so, the controller 180 recognizes which area of the display unit 151 is touched.

Referring to Fig. 1, the proximity sensor 141 may be disposed at an inner area of a mobile terminal surrounded by the touch screen or near the touch screen. The proximity sensor 141 is a sensor sensing an object approaching a predetermined detection surface or an object present in the vicinity by using the force of an electromagnetic field or infrared, without mechanical contact. The proximity sensor 141 has a longer lifecycle and better usability than a contact type sensor.

The proximity sensor 141 may include a transmissive photoelectric sensor, a direct reflective photoelectric sensor, a mirror reflective photoelectric sensor, a high-frequency oscillation proximity sensor, a capacitive proximity sensor, a magnetic proximity sensor, and an infrared proximity sensor. When the touch screen is an electrostatic type, it is configured to sense the proximity of a pointer with a change in electric field according to the proximity of the pointer. In this instance, the touch screen (or the touch sensor 144) may be classified as a proximity sensor.

Hereinafter, for convenience of description, an action for allowing the pointer on the touch screen is recognized when the pointer is close to but does not contact the touch screen is called "proximity touch", and an action for allowing the pointer to actually contact the touch screen is called "contact touch". A position for the proximity touch of the pointer on the touch screen is a position where the pointer vertically corresponds to the touch screen during the proximity touch of the pointer.

The proximity sensor senses a proximity touch and a proximity touch pattern (for example, a proximity touch distance, a proximity touch direction, a proximity touch speed, a proximity touch time, a proximity touch position, and a proximity touch moving state, and so on). Information corresponding to the sensed proximity touch operation and proximity touch pattern may be output on a touch screen.

The audio output module 152 may output audio data received from the wireless communication unit 110 or stored in the memory 160, in a call signal receiving mode, a call mode, a recording mode, a recording mode, a voice recognition mode, or a broadcast receiving mode. The audio output module 152 may output a sound signal relating to a function of the mobile terminal 100 (for example, call signal receiving sound, and message receiving sound). The audio output module 152 may include a receiver, a speaker, and a buzzer.

The alarming unit 153 outputs a signal for notifying an event occurrence of the mobile terminal 153. An example of an event occurring in a mobile terminal may include call signal reception, message reception, key signal input, and touch input. The alarming unit 153 can output a signal for notifying event occurrence with vibration, besides a video signal or an audio signal. The video signal or audio signal may be output through the display unit 151 or the audio output module 152, so that they 151 and 152 may be classified as part of the alarming unit 153.

The haptic module 154 can generate various haptic effects that a user can feel. A typical example of a haptic effect that the haptic module 154 generates includes vibration. The intensity and pattern of a vibration generated by the haptic module 154 is controllable. For example, different vibrations may be synthesized and output or may be sequentially output.

The haptic module 154 can generate various haptic effects, for example, a pin arrangement that vertically moves with respect to a contact skin surface, an injection power or suction power of air through a nozzle or an inlet, a graze on a skin surface, a contact of an electrode, an effect by stimuli such as electrostatic force, and an effect by cold/warm reproduction using a heat absorbing or generating device. The haptic module 154 can deliver haptic effects through direct contact, and a user may feel haptic effects through a muscle sense of fingers or hands. The haptic module 154 may be provided two according to a configuration aspect.

The memory 160 can store a program for an operation of the controller 180, and temporarily store input/output data (for example, a phonebook, a message, a still image, and a moving image). The memory 160 can store data relating to various patterns of vibrations and sounds, which are output during touch input on the touch screen.

The memory 160 may include at least one type of storage medium among a flash memory type, a hard disk type, a multimedia card micro type, card type memory (for example, SD or XD memory), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, magnetic disk, and optical disk. The mobile terminal 100 may operate in relation to a web storage performing the storage function of the memory 160 on internet.

The interface unit 170 serves as a path through which all external devices are connected to the mobile terminal 100. The interface unit 170 receives data from an external device or power, and then delivers it to each component in the mobile terminal 100 or transmits data in the mobile terminal 100 to an external device after power is received. For example, the interface unit 170 includes a wired/wireless headset port, an external charging port, a wired/wireless data port, a memory card port, a port connecting a device equipped with an identification module, an audio input/output (I/O) port, a video input/output (I/O) port, and an earphone port.

The identification module is a chip storing various information to authenticate the permission of the mobile terminal 100, and may include a User Identify Module (UIM), a Subscriber Identity Module (SIM), and a Universal Subscriber Identity Module (USIM). A device equipped with an identification module (hereinafter, referred to as an "identification device') may be manufactured with a smart card type. Accordingly, the identification device may be connected to the mobile terminal 100 through a port.

When the mobile terminal 100 is connected to an external cradle, the interface unit 170 may be a path through which power is supplied from the cradle to the mobile terminal 100, or various command signals input from the cradle are delivered to the mobile terminal 100. Various command signals or power input from the cradle may operate as a signal for recognizing that the mobile terminal 100 is accurately mounted on the cradle.

The controller 180 controls overall operations of a mobile terminal in general. For example, control and processing relating to a voice call, a data call, a video call are performed. The controller 180 may include a multimedia module 181 for multimedia playback. The multimedia module 181 may be implemented in the controller 180 or may be separated from the controller 180. Additionally, the controller 180 can perform pattern recognition processing to recognize writing input and drawing input on the touch screen as text and images, respectively.

The power supply unit 190 supplies power necessary for operations of each component by receiving external power and internal power in response to a control of the controller 180.

Various embodiments described herein may be realized in a computer or device similar thereto readable recording medium by using software, hardware, or a combination thereof.

In terms of hardware realization, the embodiments described herein may be realized by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electrical units for performing other functions. In some cases, such embodiments may be realized by the controller 180.

According to software implementation, embodiments such as procedures or functions may be realized with an additional software module performing at least one function or operation. Software code may be realized by software application written in a proper program language. The software code is stored in the memory 160 and is executed by the controller 180.

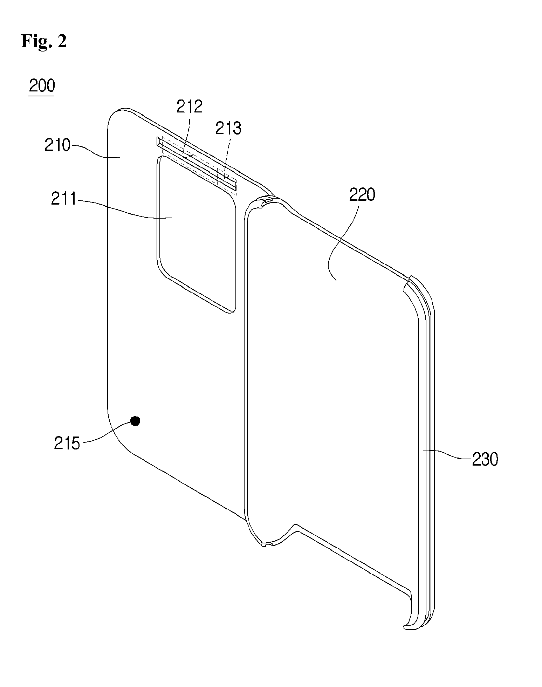

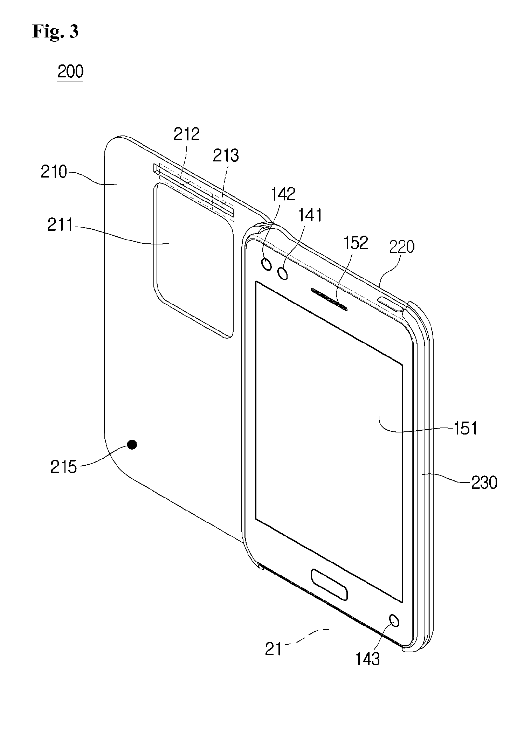

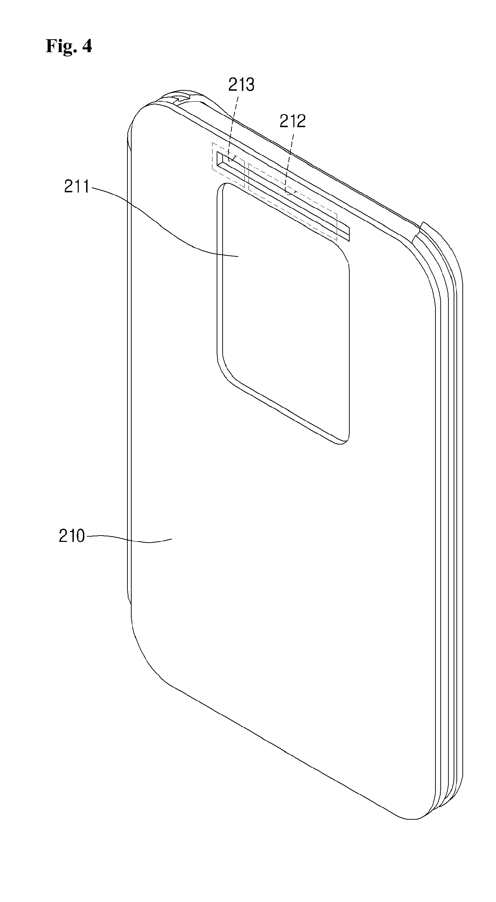

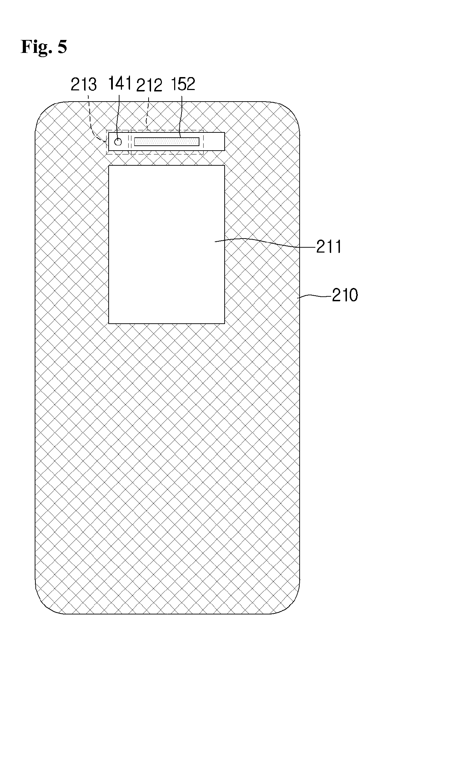

A terminal case according to an embodiment of the present invention will now be described with reference to Figs. 2 to 5. In particular, Fig. 2 is a perspective view illustrating a terminal case when the front cover is an opened state and a mobile terminal is not combined with the terminal case, Fig. 3 is a perspective view illustrating a terminal case combined with a mobile terminal when the terminal case is in an opened state,. Fig. 4 is a perspective view illustrating a terminal case combined with a mobile terminal when the terminal case is in a closed state, and Fig. 5 is a front view illustrating a terminal case combined with a mobile terminal when the terminal case is in an opened state according to embodiments of the present invention.

Referring to Figs. 2 to 5, the terminal case 200 includes a front cover 210, a back cover 220, and a mobile terminal fixing unit 230. The proximity sensor 141, the illuminator sensor 142, the front cover state detection unit 143, the display unit 151, and the audio output module 152 are exposed at the front of the mobile terminal 100.

The front cover 210 protects the front of the mobile terminal 100 and may be formed of a plate-shaped opaque member which corresponds to the front of the mobile terminal 100. As shown, the front cover 210 includes a first front incision part 211, a second front incision part 212, a third front incision part 213, and a front cover magnetic body 215.

The first front incision part 211 can be formed by incising a portion of the front cover 210. The first front incision part 211 exposes a portion of the display unit 151 while the front cover 210 is in a closed state. Accordingly, a user can see an image or video which is displayed on a portion of the display unit 151 and perform a touch input through the first front incision part 211.

The second front incision part 212 can be formed by incising a portion of the front cover 210. The second front incision part 212 exposes the audio output module 152 while the front cover 212 is in a closed state. Accordingly, a user can hear a sound which is output from the audio output module 152 through the second front incision part 212.

The third front incision part 213 can be formed by incising a portion of the front cover 210. The third front incision part 213 exposes the proximity sensor 141 while the front cover 210 is in a closed state. Accordingly, the mobile terminal 100 can detect the approach of an object by using the proximity sensor 141 through the third front incision part 213.

In order to improve the ease of fabrication, strength, and design of the front cover 210, at least two of the first, second and third front incision parts 211, 212 and 213 may be implemented as a single incision part. For example, as shown in Figs. 2 to 5, the second front incision part 212 and the third front incision part 213 may be implemented as a single incision part. Also, in consideration of the strength and design of the front cover 210, the front cover 210 may have various materials and colors.

According to an embodiment of the present invention, some or all of the first, second and third front incision parts 211, 212 and 213 may be provided as they are in an incision state and thus may have no member at all. According to another embodiment of the present invention, some or all of the first, second and third front incision parts 211, 212 and 213 may be filled with a transparent member.

The front cover magnetic body 215 may be mounted at the front cover 210. The front cover 210 may include a permanent magnet, but is not limited thereto. When the front cover magnetic body 215 is mounted in the front cover 210, changes in the magnetic field occur as the front cover 210 is an opened state or a closed state. If the front cover state detection unit 143 is a sensor for sensing changes in the magnetic field, for example, a Hall sensor, the controller 180 can detect whether the front cover 210 is an opened or closed state through the front cover state detection unit 143.

A surface of the front cover 210 which contacts the front of the mobile terminal 100 may be processed to protect electrostatic discharge thereby preventing an unintended touch input of a user. A protecting material for an electrostatic discharge may be applied or a protection film for an electrostatic discharge may be attached to the front cover 210, so as to protect the electrostatic discharge.

Further, the back cover 220 protects a backside of the mobile terminal 100. In addition, the mobile terminal fixing unit 230 fixes the terminal case 200 to the mobile terminal 100.

Moreover, the illuminator sensor 142 may be disposed adjacent to the proximity sensor 141. In more detail, the proximity sensor 141 and the illuminator sensor 142 may be disposed in the same direction on the display unit 151. In the embodiment of Fig. 3, both the proximity sensor 141 and the illuminator sensor 142 may be disposed at an upper part of the display unit 151.

Further, the proximity sensor 141 and the illuminator sensor 142 may be disposed in the same direction with respect to a vertical centerline 21 of the mobile terminal 100. In the embodiment of Fig. 3, both the proximity sensor 141 and the illuminator sensor 142 are disposed at the left part of the display unit 151 In addition, the proximity sensor 141 may be disposed closer to the vertical centerline 21 of the mobile terminal 100 as compared to the illuminator sensor 142. This can allow the second front incision part 212 and the third front incision part 213 to be designed easily, so that the front cover 210 covers the illuminator sensor 142 but does not cover the proximity sensor 141 when the front cover 210 is in a closed state.

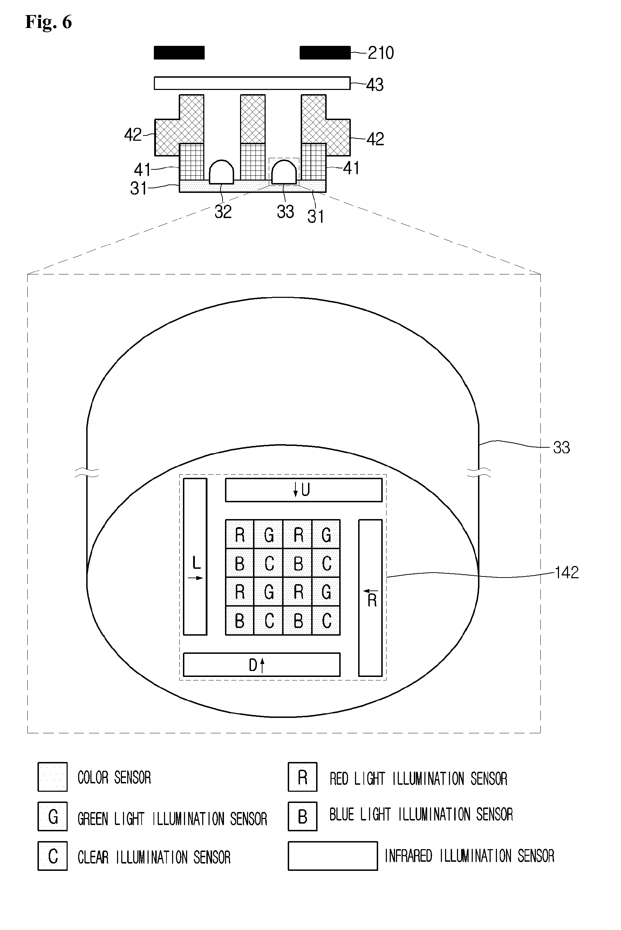

In more detail, the distance between the center point of the illuminator sensor 142 and the center point of the proximity sensor 141 may be smaller than the length of a shorter side among a horizontal side and a vertical side by about 20 % (e.g., about 15 %, about 10 %, or about 5 %). A structure of a proximity sensor and its surrounding structure according to an embodiment of the present invention will now be described with reference to Figs. 6 to 7.

As shown in Fig. 6, the proximity sensor 141 includes a substrate 31, a light emitting device 32, and a light receiving device 33. The mobile terminal 100 includes a shock absorbing material 41, a partition wall 42, and a front glass 43.

The light emitting device 32 and the light receiving device 33 are mounted on the substrate 31. Further, the light emitting device 32 is mounted on the substrate 31 and emits light to confirm a proximity state of an object. For example, the light emitting device 32 may emit infrared light.

The light receiving device 33 is mounted on the substrate 31, and receives a reflected light generated from the light emitting device 32 and is reflected by an object, and generates a signal according to the intensity of the received light. Especially, the light receiving device 33 can receive infrared light and detect the illumination of the received infrared light.

Although described later, the light receiving device 33 may include an infrared illumination sensor. Especially, the light receiving device 33 may further include a visible-light illumination sensor. The visible-light illumination sensor may include a red-light illumination sensor, a green-light illumination sensor, a blue-light illumination sensor, and a clear-light illumination sensor.

The partition wall 42 creates a path through which the light emitting device 32 emits light and a path through which the light receiving device 33 receives light. Further, the shock absorbing material 41 prevents damage of the proximity sensor 141, especially, the substrate, due to a pressure applied to the front glass 43. In addition, because the proximity sensor 141 of Fig. 6 detects a proximity and an illumination, it can be called a proximity-illumination sensor.

Referring to Fig. 6, the light receiving device 33 includes the illuminator sensor 142, and the illuminator sensor 142 includes a color sensor and an infrared illumination sensor. The color sensor includes a red-light illumination sensor, a green-light illumination sensor, a blue-light illumination sensor, and a clear-light illumination sensor. The color sensor can detect the color of light which enters the color sensor. Additionally, the color sensor can detect the illumination of light which enters the color sensor.

The red-light illumination sensor includes at least one red-light illumination detection electrode. Each red-light illumination detection electrode can detect the illumination of red light. A plurality of red-light detection electrodes of the red-light illumination sensor may be disposed two-dimensionally.

The green-light illumination sensor includes at least one green-light illumination detection electrode. Each green-light illumination detection electrode can detect the illumination of green light. A plurality of green-light detection electrodes of the green-light illumination sensor may be disposed two-dimensionally.

The blue-light illumination sensor includes at least one blue-light illumination detection electrode. Each blue-light illumination detection electrode can detect the illumination of blue light. A plurality of blue-light detection electrodes of the blue-light illumination sensor may be disposed two-dimensionally.

The clear-light illumination sensor includes at least one clear-light illumination detection electrode. Each clear-light illumination detection electrode can detect the illumination of clear light. A plurality of clear-light detection electrodes of the clear-light illumination sensor may be disposed two-dimensionally. The clear light corresponds to light detected when no color filter is used. It can be called a white-light illumination sensor, but is not limited thereto.

The infrared illumination sensor includes at least one infrared illumination detection electrode. Each infrared illumination detection electrode can detect the illumination of infrared. A plurality of infrared detection electrodes of the infrared illumination sensor may be disposed two-dimensionally.

When the infrared illumination sensor includes a plurality of infrared illumination detection electrodes, the light emitting device 32 and the infrared illumination sensor can operate as a horizontal motion sensor which detects a horizontal motion corresponding to a horizontal motion of a surrounding object. For example, a plurality of infrared illumination detection electrodes can detect each of an upper moving direction, a lower moving direction, a right moving direction, and a left moving direction of a surrounding object by detecting an infrared emitted from the light emitting device 32.

In the structure as in Fig. 6, the light emitting device 32 and the infrared illumination sensor may form the proximity sensor 141 which detects a proximity corresponding to a vertical motion of an around-moving object.

Additionally, when an object is skin, the light emitting device 32 and the infrared illumination sensor may form a photoplethysmography (PPG) sensor which detects the PPG of the skin. Further, the proximity sensor 141 and the horizontal motion sensor may form a gesture sensor detecting a gesture including vertical and horizontal motions of an object moving around. At this point, if an object is a front cover, the gesture sensor may serve as a role of the front cover state detection unit 143.

The red-light illumination sensor, the green-light illumination sensor, the blue-light illumination sensor, and the clear-light illumination sensor may form the color sensor and the visible-light illumination sensor. Further, a sensor including the light emitting device 32 and the light receiving device 33 as a single package shown in Fig. 6 may include a proximity sensor, a PPG sensor, a horizontal motion sensor, a gesture sensor, a color sensor, and a visible light illumination sensor.

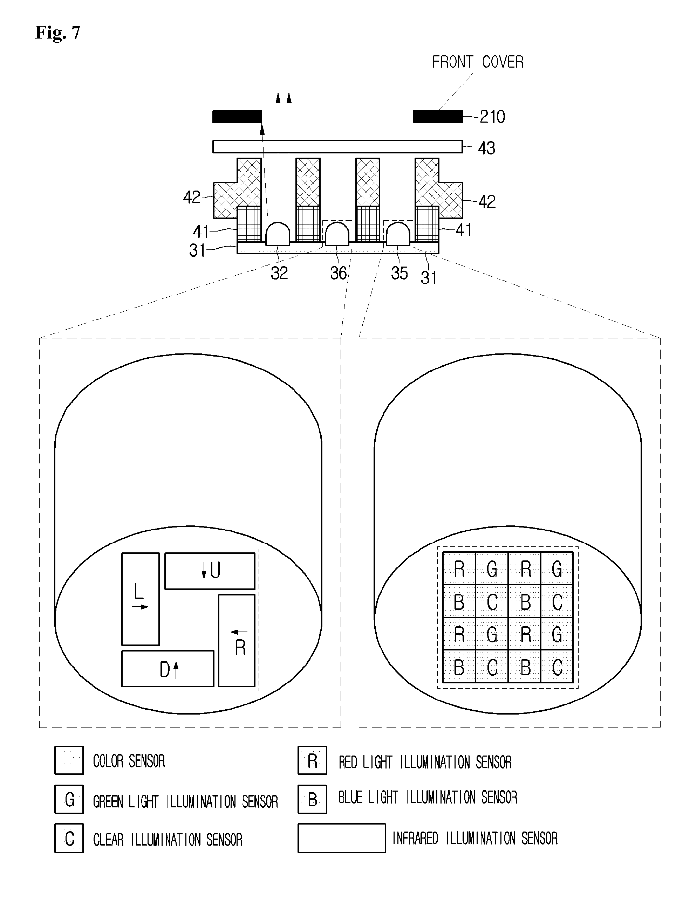

Next, Fig. 7 is a view illustrating a structure of a proximity sensor and its surrounding structure according to another embodiment of the present invention. Because the proximity sensor 141 of Fig. 7 detects a proximity and an illumination, it can be called a proximity illumination sensor. As shown, the proximity sensor 141 includes a substrate 31, a light emitting device 32, a first light receiving device 35, and a second light receiving device 36. The mobile terminal 100 also includes a shock absorbing material 41, a partition wall 42, and a front glass 43.

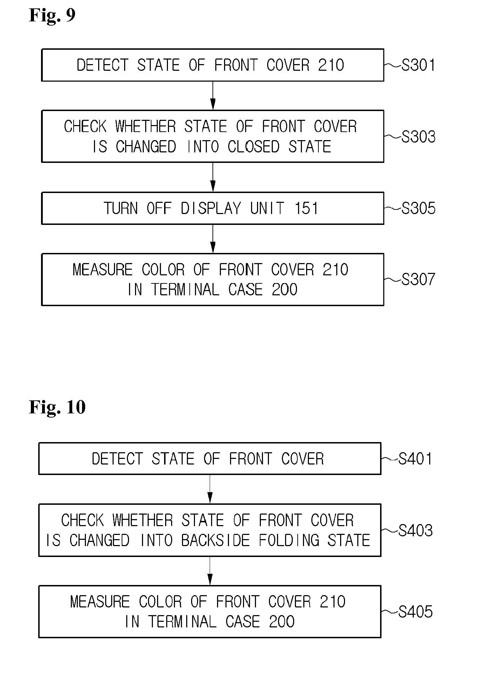

The light emitting device 32, the first light receiving device 35, and the second light receiving device 36 are mounted on the substrate 31. Unlike the embodiment of Fig.6, according to the embodiment of Fig. 7, the first light receiving device 35 includes a color sensor but does not include an infrared illumination sensor, and the second light receiving device 36 includes an infrared illumination sensor but does not include a color sensor. Since other descriptions are identical or similar to those of Fig. 9, they are omitted.

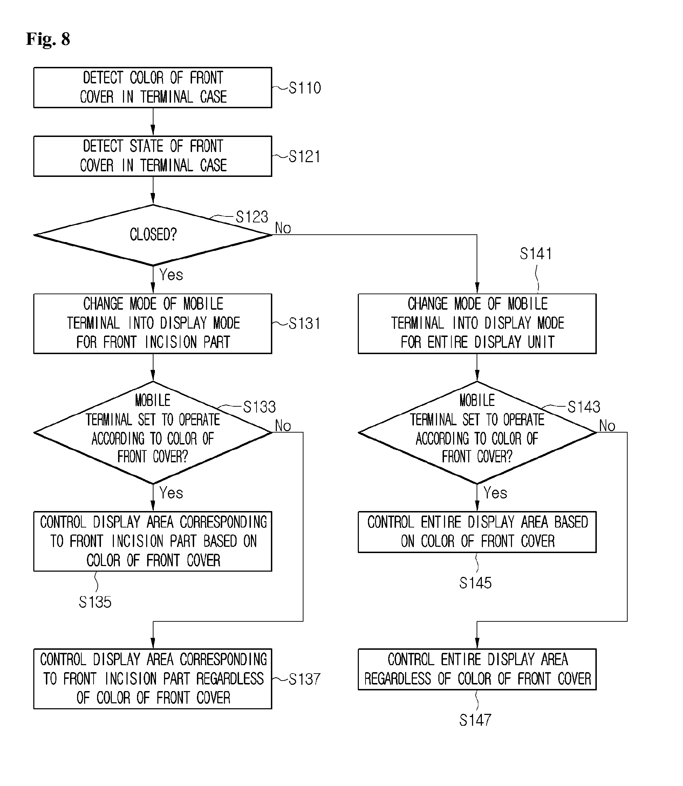

Next, Fig. 8 is a view illustrating an operation of a mobile terminal according to an embodiment of the present invention. As shown, the controller 180 detects the color of the front cover 210 of the terminal case 200 (S110). A method of detecting the color of the front cover 210 is described later.

The controller 180 detects a state of the front cover 210 in the terminal case 200 by using the front cover state detection unit 143 (S121). Further, values indicating a state of the front cover 210 in the terminal case 200 may include a closed state and an opened state.

The opening of the terminal case 200 may mean that the front cover 210 of the terminal case 200 is completely off from the front of the mobile terminal 100 and an angle between the front cover 210 and the front of the mobile terminal 100 is greater than a predetermined angle. The closing of the terminal case 200 may mean that the front cover 210 of the terminal case 200 completely covers the front of the mobile terminal 100 and an angle between the front cover 210 and the front of the mobile terminal 100 is less than a predetermined angle.

In addition, values indicating a state of the front cover 210 of the terminal case 200 may include a plurality of closed states including a first a closed state and a second closed state. Further, an angle between the front cover 210 and the front of the mobile terminal 100 in the second closed state may be less than an angle between the front cover 210 and the front of the mobile terminal 100 in the first closed state.

The controller 180 detects a state of the front cover 210 in the terminal case 200 by using the front cover state detection unit 143. If the front cover state detection unit 143 is a Hall sensor and the front cover magnetic material 215 at the front cover 210 approaches the Hall sensor, a sensing value of the Hall sensor may change and the controller 180 can compare the sensing value of the Hall sensor with a reference value.

The controller 180 can detect a state of the front cover 210 of the terminal case 200 based on a comparison result between the sensing value of the Hall sensor and the reference value. For example, when the front cover magnetic material 215 approaches the Hall sensor, a sensing value of the Hall sensor may be increased. If the sensing value of the Hall sensor is greater than the reference value, the controller 180 can detect a state of the front cover 210 of the terminal case 200 as a closed state. If the sensing value of the Hall sensor is less than the reference value, the controller 180 can detect a state of the front cover 210 of the terminal case 200 as an opened state.

Moreover, a reference angle between the front cover 210 and the front of the mobile terminal 100, which corresponds to when the front cover 210 of the terminal case 200 changes between a closed state and an opened state, may vary according to a setting of a reference value compared with a sensing value of a Hall sensor, the intensity of the front cover magnetic material 215, and the sensitivity of the Hall sensor.

As mentioned above, the front cover state detection unit 143 may include a gesture sensor which is formed of a plurality of two-dimensionally disposed infrared illumination detection electrodes and the proximity sensor 141. In this instance, the front cover state detection unit 143 can detect a state of the front cover based on a sensing value detected by the plurality of infrared illumination detection electrodes and the proximity sensor 141 when a state of the front cover changes.

The front cover state detection unit 143 may include an acceleration sensor. In this instance, the front cover state detection unit 143 can detect a state of the front cover based on an acceleration value according to a unique impact when a state of the front cover changes.

The controller 180 checks whether the front cover 210 of the terminal case 200 is in a closed state (S123). When the front cover 210 of the terminal case 200 is in a closed state (Yes in S123), the controller 180 changes a display mode of the mobile terminal 100 into a display mode for the front incision part 213 (S131). In the display mode for the front incision part 215, the controller 180 displays image information including an icon, text, and an image on the display unit 151 in an area corresponding to the front incision part 215 and does not display information on the display unit 151 in the remaining area other than the front incision part 215.

When the display unit 151 is driven in divided regions, the controller 180 can turn on at least one of a liquid crystal module and a backlight of the display unit 151 and the touch sensor 144 in an area corresponding to the front incision part 215 and turn off at least one of a liquid crystal module and a backlight of the display unit 151 and the touch sensor 144 in an area that does not correspond to the front incision part 215. Further, the controller 180 can change a mode of the mobile terminal 100 into a low power mode such as a sleep mode.

The controller 180 checks whether the mobile terminal 100 operates according to the color of the front cover 210 in the display mode for the front incision part 213 (S133). This may be set by a user or a manufacturer. If the mobile terminal 100 is set to operate according to the color of the front cover 210 in the display mode for the front incision part 213 (Yes in S133), the controller 180 controls a display area corresponding to the front incision part 213 based on the color of the front cover 210 (S135).

According to an embodiment of the present invention, the controller 180 determines the color of at least one graphic user interface (GUI) element on a display area corresponding to the front incision part 213 based on the color of the front cover 210 and applies the determined color to at least one GUI element.

According to another embodiment of the present invention, the controller 180 notifies the color of the front cover 210 and a current display mode (for example, a display mode for front incision part) to an application to be executed. Thus, the controller 180 allows the corresponding application to determine the color of at least one GUI element on the display area corresponding to the front incision part 213 based on the color of the front cover 210 and apply the determined color to at least one GUI element.

Further, at least one GUI element includes at least one of backgrounds, icons, texts, virtual buttons, scroll bars, and images. When the color of at least one GUI element is determined based on the color of the front cover 210, a color similar or identical to that of the front cover 210 may be determined. In addition, when the first color is identical or similar to the second color, a difference between a wavelength of first color and a wavelength of second color may be within a predetermined value.

When the color of at least one GUI element is determined based on the color of the front cover 210, a color having complementary relationship with the color of the front cover 200 may be determined. When the color of at least one GUI element is determined based on the color of the front cover 210, a color lookup table may be used. Further, the color lookup table may include a relationship between the color of the front cover 210 and the color of the GUI element.

**(Table 1)**

| COLOR OF FRONT COVER | TEXT COLOR | BACKGROUND COLOR | ICON |
|---|---|---|---|
| WHITE | BLACK | WHITE | RED |
| RED | WHITE | RED | BLUE |
| YELLOW | BLUE | YELLOW | RED |
| GREEN | RED | GREEN | BLUE |
| BLUE | WHITE | BLUE | RED |
| BLACK | WHITE | BLACK | RED |

According to an embodiment of the present invention, a color to be applied to a GUI element may be similar to a color to be applied to another GUI element. A color to be applied to a text may be similar to a color to be applied to a background. Additionally, a color to be applied to an icon may be similar to a color to be applied to a background.

According to another embodiment of the present invention, a color to be applied to a GUI element may be different from a color to be applied to another GUI element. For example, a color to be applied to a text may be different from a color to be applied to a background. Additionally, a color to be applied to an icon may be different from a color to be applied to a background.

If the mobile terminal 100 is not set to operate according to the color of the front cover 210 in the display mode for the front incision part 213 (No in S133), the controller 180 controls a display area corresponding to the front incision part 213 regardless of the color of the front cover 210 (S137).

Further, the controller 180 can apply a color to at least one GUI element on a corresponding display area. The color is designed regardless of the color of the front cover 210. When the front cover 210 of the terminal case 200 is an opened state (No in S123), the controller 180 changes a display mode of the mobile terminal 100 into a display mode for the entire display unit 151 (S141).

In the display mode for the entire display unit 151, the controller 180 can turn on at least one of a liquid crystal module and a backlight of the display unit 151 and the touch sensor 144 in an area corresponding to the entire display unit 151, and display image information including an icon, text, and an image in an area corresponding to the entire display unit 151. Further, the controller 180 can change a mode of the mobile terminal 100 into a high power mode such as a normal mode.

The controller 180 checks whether the mobile terminal 100 operates according to the color of the front cover 210 in the display mode for the entire display unit 151 (S143). This may be set by a user or a manufacturer.

If the mobile terminal 100 is set to operate according to the color of the front cover 210 in the display mode for the entire display unit 15 (Yes in S143), the controller 180 controls an entire display area based on the color of the front cover 210 (S145). According to an embodiment of the present invention, the controller 180 determines the color of at least one graphic user interface (GUI) element on an entire display area based on the color of the front cover 210 and applies the determined color to at least one GUI element.

According to another embodiment of the present invention, the controller 180 notifies the color of the front cover 210 and a current display mode (for example, an entire display mode) to an application to be executed. Thus, the controller 180 allows the corresponding application to determine the color of at least one GUI element on the entire display area based on the color of the front cover 210 and apply the determined color to at least one GUI element. Operation S145 is similar to operation S135 except for a display mode, and thus its detailed description is omitted.

However, according to an embodiment of the present invention, in a display mode for front incision part, a display area corresponding to a front incision part is controlled based on the color of a front cover. That is, in a display mode for the front incision part, a control of a display area is not supported regardless of the color of a front cover. Additionally, in the entire display mode, an entire display area can be controlled regardless of the color of a front cover. That is, in the entire display mode, a control of a display area may not be supported according to the color of a front cover.

If the mobile terminal 100 is not set to operate according to the color of the front cover 210 in the display mode for the entire display unit 151 (No in S143), the controller 180 controls the entire display area regardless of the color of the front cover 210 (S147). The controller 180 can also apply a color to at least one GUI element on an entire display area. The color is designed regardless of the color of the front cover 210.

A method of detecting the color of the front cover 210 will now be described with reference to Figs. 9 and 10. In particular, Fig. 9 is a flowchart illustrating a method of detecting the color of a front cover according to an embodiment of the present invention.

The controller 180 detects a state of the front cover 210 of the terminal case 200 (S301). The controller 180 checks whether the front cover 210 of the terminal case 200 changes from an opened state to a closed state based on a state detection of the front cover 210 (S303). When the front cover 210 of the terminal case 200 changes from an opened state to a closed state, the controller 180 turns off the display unit 151 (S305).

In addition, the controller 180 can turn off a liquid crystal module and a backlight of the display unit 151. Thus, errors in the measurement of color can be reduced by turning off the display unit 151. However, if an error in the measurement of color is less, the controller 180 does not have to turn off the display unit 151.

When the front cover 210 of the terminal case 200 changes from an opened state to a closed state, the controller 180 measures the color of the front cover 210 of the terminal case 200 by using a color sensor or an image sensor of the illuminator sensor 142 (S307). In more detail, the controller 180 can measure the color of the terminal case 200 within a predetermined time from when a closed state of the front cover 210 is detected. That is, a time between detecting a closed state of the front cover 210 and starting a color measurement (e.g., a measurement start time or a measurement end time) can be less than a reference time.

When the front cover 210 is in a closed state, it is preferable to enter a low power consumption mode as soon as possible in order to prevent the waste of power. Thus, a smaller reference time is more advantageous. For example, the reference time may be about 1 sec, about 0.5 sec, or about 0.1 sec.

Next, Fig. 10 is a flowchart illustrating a method of detecting the color of a front cover according to an embodiment of the present invention. In the embodiment of Fig. 10, the illuminator sensor 142 or the proximity sensor of Figs. 6 and 7 is prepared at the backside of the mobile terminal 100 alone or additionally.

The controller 180 detects a state of the front cover 210 of the terminal case 200 (S401). In addition, values indicating a state of the front cover 210 of the terminal case 200 may include a backside folding state indicating that the front cover 210 is in a folded state toward the backside of the mobile terminal 100 as well as a closed state and an opened state.

The controller 180 checks whether the front cover 210 of the terminal case 200 is in a backside folding state (S403). When the front cover 210 of the terminal case 200 changes into a backside folding state, the controller 180 measures the color of the front cover 210 of the terminal case 200 by using a color sensor or an image sensor of the illuminator sensor 142 (S405).

In more detail, the controller 180 can measure the color of the terminal case 200 within a predetermined time from when a backside folding state of the front cover 210 is detected. That is, a time between a time of detecting a backside folding state of the front cover 210 and a time of starting a color measurement (e.g., a measurement start time or a measurement end time) can be less than a reference time. For example, the reference time can be about 1 sec, about 0.5 sec, or about 0.1 sec.

In the embodiment of Fig. 10, since the color of the front of the front cover 210 is detected when the front cover 210 is in a closed state, the color of the front of the front cover 210 may be used for determining the color of a GUI element.

According to various embodiments of the present invention, a terminal provides a user interface matching a terminal case intuitively and easily.

According to an embodiment of the present invention, the above method may be realized by a processor readable code in a program recorded medium. Examples of a processor readable medium may include read-only memory (ROM), random-access memory (RAM), CD-ROMs, magnetic tapes, floppy disks, and optical data storage devices, and may be implemented in a form of carrier waves (such as data transmission through the Internet).

## Claims

1. A mobile terminal combinable with a terminal case including a front cover with a front incision part, the mobile terminal comprising:
a wireless communication unit configured to provide wireless communication;
a touch screen;
a state detection sensor configured to detect whether the front cover is in an opened state or a closed state with respect to the mobile terminal;
a color sensor configured to detect a color of the front cover; and
a controller configured to control the touch screen based on whether the front cover is in the opened or closed state and the detected color of the front cover.

2. The terminal of claim 1, wherein when the front cover is in the closed state, the controller is further configured to control a first display area corresponding to the front incision part based on the detected color of the front cover.

3. The terminal of claims 1 or 2, wherein the controller is further configured to determine a color of at least one graphic user interface (GUI) element on the first display area based on the detected color of the front cover.

4. The terminal of any one of claims 1-3, wherein the controller is further configured to determine a color identical or similar to the detected color of the front cover as the color of the at least one GUI element.

5. The terminal any one of the preceding claims, further comprising:
a memory configured to store a lookup table including colors of the at least one GUI verses colors of the front cover,
wherein the controller is further configured to determine the color of the at least one GUI element using the lookup table.

6. The terminal of any one of the preceding claims , wherein the controller is further configured to notify the color of the front cover to an application while executing the application and determine the color of the at least one GUI element on the first display area based on the detected color of the front cover.

7. The terminal of any one of the preceding claims, wherein the at least one GUI element comprises text and a background.

8. The terminal of any one of the preceding claims, wherein the controller is further configured to determine a color of the text and a color of the background on the first display area based on the detected color of the front cover, and
wherein the color determined for the text is different from the color determined for the background.

9. The terminal of any one of the preceding claims, wherein the color sensor is provided at a front of the mobile terminal, and
wherein the controller is further configured to detect the color of the front cover using the color sensor when the front cover is in the closed state.

10. The terminal of any one of the preceding claims, wherein the color sensor is provided at a backside of the mobile terminal, and
wherein the controller is further configured to detect the color of the front cover using the color sensor when the front cover is in a folded state toward the backside of the mobile terminal.

11. A method of controlling a mobile terminal combinable with a terminal case including a front cover with a front incision part, the method comprising:
detecting, via a state detection sensor of the mobile terminal, whether the front cover is in an opened state or a closed state with respect to the mobile terminal;
detecting, via a color sensor of the mobile terminal, a color of the front cover; and
controlling, via a controller, a touch screen of the mobile terminal based on whether the front cover is in the opened or closed state and the detected color of the front cover.

12. The method of claim 11, wherein when the front cover is in the closed state, the method further comprises controlling a first display area corresponding to the front incision part based on the detected color of the front cover.

13. The method of claims 11 or 12, further comprising:
determining a color of at least one graphic user interface (GUI) element on the first display area based on the detected color of the front cover.

14. The method of any one of claims 11-13, wherein the color sensor is provided at a front of the mobile terminal, and
wherein the method further comprises detecting the color of the front cover using the color sensor when the front cover is in the closed state.

15. The method of any one of the preceding claims, wherein the color sensor is provided at a backside of the mobile terminal, and
wherein the method further comprises detecting the color of the front cover using the color sensor when the front cover is in a folded state toward the backside of the mobile terminal.
